# EUROPEAN PATENT APPLICATION

(11) **EP 1 017 142 A1**
(43) Date of publication of application: **05.07.2000**
(21) Application number: 98935445.1
(22) Date of filing: 01.07.1998
(51) Int. Cl.: H02B 13/035, H01H 71/00, H01H 73/02

(54) **RECLOSER-AUTOMATIC SWITCH FOR AERIAL POWER LINES OF THE TEL SERIES**

(30) Priority: 18.07.1997 RU 97113082
(71) Applicant: TOO "Tavrida Electric R", Moscow, 123294 (RU); Chaly, Alexei Mikhailovich, Moscow, 123298 (RU)
(72) Inventor: CHALY, Alexei Mikhailovich, Moscow, 123298 (RU); CHERVINSKY, Oleg Igorevich, Moscow, 123298 (RU)
(74) Representative: Casey, Lindsay Joseph
(86) International application number: RU9800209
(87) International publication number: WO9904472

(57) **Abstract**

The present invention relates to a recloser that comprises a vacuum switch having its contacts in the shape of current inputs as well as transmission-type transformers connected to said current inputs. These components are all coated with a polymeric isolation material which is covered by a metallic protection casing attached to the isolation of the current inputs. All conductive parts are isolated so that a loss in the casing tightness has no incidence on the operation capacity of the apparatus. The current inputs are connected to isolated conductors by collet clamps and protected by an atmosphere-resistant resin-based isolation. The lower part of the casing is made of an atmosphere-resistant semi-unbreakable glass of the Lexan type so that the position indicator of the switch remains clearly visible and that the operation of the vacuum switch can be visually monitored.

## Description

### Technical field

The present invention is related to the electrical engineering, namely to the switching equipment and is intended for commutations and implementation of automatic switching-off modes, automatic reclosing, sectioning etc. for medium voltage aerial electrical power distribution lines.

### Background art.

There are reclosers including vacuum switch, current transformers, bushings and air /1/ or SF₆-gas /2/ filled protection casing.

The disadvantages of that solution in the first case are the large overall dimensions because of insulating distances in the air, and in the second case the strict requirements to the casing leak-proofness and the complex manufacturing technology.

The goal reached in the claimed invention is high reliable and minimized in overall dimensions free recloser creation. Additionally, the claimed invention has allowed reduction of the prime cost of recloser.

### Disclosure of Invention.

According to the invention, the recloser - automatic switch for aerial power lines of the TEL series, consisting of vacuum switch with vacuum chambers, thrust insulators, flexible contacts, current transformers and contact terminals executed as bushings. They are placed in a unified insulation casing having the protective body above with a transparent window at the bottom for the visual inspection.

To ensure the reliable contact with vacuum switch the bushing design allows to insert and fix the insulated wires into the bushing - in this case the insulation of the wires turns into the part of the bushing insulation. TEL-type vacuum switch including phase-separated magnetic actuator provided with the magnetic latch of the closed contacts is the most suitable for this recloser.

### Brief description of drawings.

Figure 1 is a general view of recloser and the explanation of method of connection to the aerial power lines.
Figure 2 is a cross-section of the axis of one of the recloser's vacuum switch modules.

### The best mode for carrying out the invention.

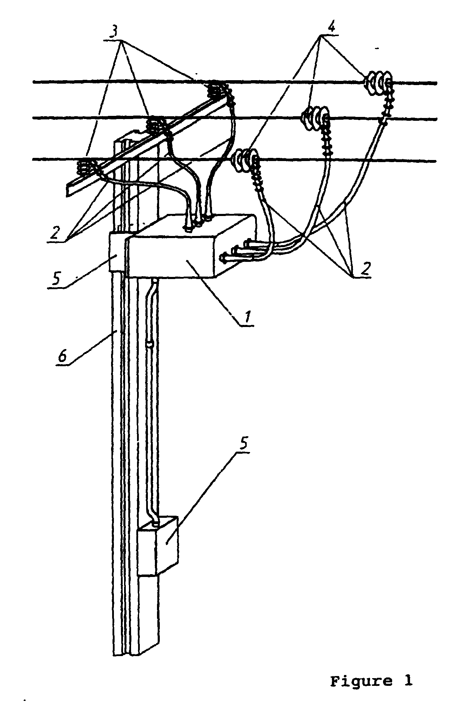

Figure 1 shows the recloser 1 - automatic switch for aerial power lines of the TEL series with insulated jumper wires 2, support insulators 3, hanging insulators 4, control device 5, mounted on a pole 6.

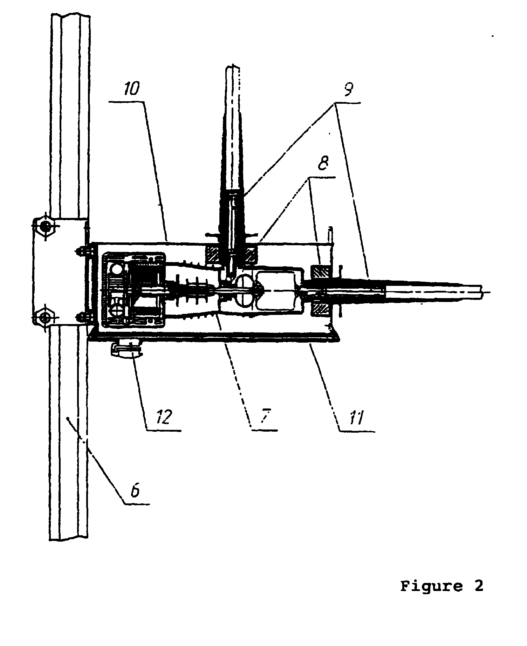

Figure 2 shows the cross-section of the axis of one of the recloser's vacuum switch modules 7, mounted on a pole 6. Recloser 1 contains current transformers 8, bushings 9 /current inputs/, casing 10, Lexan type bulletproof glass 11 and sectional junction 12 with the control device 5.

The device works as follows. Recloser 1 is mounted on the aerial power line pole and connected in parallel to the break between hanging insulators 4.

Operations with the vacuum switch 7 plug or unplug a circuit between bushings 9. These operations are provided by the control device 5 commands. Control device 5 produces commands under the current transformer 8 signals according to the necessary protection and automatics functions.

### Reference

1. DOROSHEV K.I. Ekspluatatsya komplektnykh raspredelitelnykh ustroistv 6-220 kV. Moscow, Energoatomizdat, 1987, pages 132-135? Figures 3.35, 3.36.
2. Pole Mounted Auto-Isolating Recloser. GEC ALSTHOM T@D, 1996

## Claims

1. Recloser - automatic switch for aerial power lines of the TEL series, consisting of a vacuum switch, current transformers, bushings and protection casing, **characterised** in that vacuum switch with vacuum chambers, thrust insulators, flexible contacts, current transformers and contact terminals executed as bushings, is placed in a unified insulation casing having the protective body above with a transparent window at the bottom for the visual inspection.

2. A recloser according to claim 1, wherein the insulation of the wires, connected with recloser, is executed as a part of the bushing insulation.

3. A recloser according to claim 1 or claim 2, wherein the TEL-type switch including phase-separated magnetic actuator provided with the magnetic latch of the closed contacts is used as the vacuum switch.
